# EUROPEAN PATENT APPLICATION

(11) **EP 2 846 250 A2**
(43) Date of publication of application: **11.03.2015**
(21) Application number: 14183293.1
(22) Date of filing: 02.09.2014
(51) Int. Cl.: G06F 3/0488

(54) **Mobile terminal and method for controlling the same**

(30) Priority: 10.09.2013 KR 20130108673
(71) Applicant: LG Electronics, Inc., Seoul 150-721 (KR)
(72) Inventor: Lee, Jeonghyun, 137-893 SEOUL (KR); Lee, Jaemoo, 137-893 SEOUL (KR); Cho, Kyungmin, 137-893 SEOUL (KR); Song, Minah, 137-893 SEOUL (KR); Park, Jongkyeong, 137-893 SEOUL (KR)
(74) Representative: Cabinet Plasseraud

(57) **Abstract**

Provided is a mobile terminal including a display unit configured to display a plurality of images together, the plurality of images being separated from one another , a touch sensing unit configured to receive a touch input applied to a control region between the plurality of images and a control unit configured to select at least one of the plurality of images and control the display unit to change a display status of the selected image.

## Description

### BACKGROUND OF THE DISCLOSURE

### 1. Field of the Disclosure

This specification relates to a mobile terminal including a display unit that displays a plurality of images together.

### 2. Background of the Disclosure

A terminal is broadly categorized by mobility into a mobile terminal and a stationary terminal. The mobile terminal is further categorized by portability into a handheld terminal and a vehicle-mounted terminal.

In response to an increasing demand for diversified functions, the terminal has been realized in the form of a multimedia player with multiple functions such as shooting a photographic object as a still image or moving images, reproducing digital audio and video compression files, playing a game, receiving a broadcast or the like. Furthermore, structural and software modifications to the mobile terminal are considered for supporting and improving functions of the mobile terminal.

As an example of various functions, a user may photograph an image with a camera included in his/her mobile terminal or download an image from a web page to store the image in the terminal. Images stored by the user are listed according to criteria. In addition, a predetermined number of images having a predetermined size may be displayed on a display unit at one time.

A user may change or edit a display status of each image. However, in order to edit an image, a user should select one image to display a menu, or activate the image on the entire display unit.

Further, a plurality of images include separation regions, which are arranged at a predetermined distance, to separate the plurality of images from each other. However, the form of the separation regions cannot be changed according to a user's control.

### SUMMARY OF THE DISCLOSURE

Therefore, an aspect of the detailed description is to provide a method of transforming an image using a separation space between a plurality of images.

The present invention provides a method of transforming an image using a separation space between a plurality of images.

To achieve these and other advantages and in accordance with the purpose of this specification, as embodied and broadly described herein, there is provided a mobile terminal including a display unit configured to display a plurality of images together, the plurality of images being separated from one another; a touch sensing unit configured to receive a touch input applied to a control region between the plurality of images; and a control unit configured to select at least one of the plurality of images and control the display unit to change a display status of the selected image.

The display unit may include a first control image including a plurality of control lines extending in a first direction in the control region, and the control unit may select an image adjacent to one region of the plurality of control lines, the touch input being applied to the region.

The control unit may control the display unit to partially transform and display the control line based on a continuous touch input moved in a direction intersecting with the first direction and to restore and display the partially transformed control line when the continuous touch input is released.

When a continuous touch input is applied in a direction opposite to the direction intersecting with the first direction, the control unit may control the display unit to retransform and display the image.

The display unit may display a status indication point indicating a degree of control of a predetermined display status of the image, and when the display status is changed, the control unit may change a display position of the status indication point according to the display status based on a touch input applied to the first control image.

The control unit may control the display unit to sequentially transform the image based on a plurality of touch inputs applied to the first control image.

The control unit may control the display unit to transform the image based on a continuous touch input that is first applied to one region of the first control image and then released from another region, and the control unit may transform the image based on a distance moved from the region to which the touch input is first applied.

The control unit may control the display unit to display a second control image formed in a form of a scroll bar that extends in the first direction.

The control unit may select a plurality of images based on touch inputs applied to a plurality of regions that are spaced apart on the first control image.

The control unit may change a first display status of the image based on a touch input applied to the second control image, and the display unit may display a second control image for receiving a touch input to change a second display status different from the first display status of the image.

The first and second control images may include a plurality of control lines extending in directions intersecting with one another, and the display unit may display the plurality of control lines of the first control image and the second control image in forms different from each other.

The control unit may select at least one image displayed between two parallel control lines based on touch inputs applied to the two control lines and control the display unit to transform and display the selected at least one image based on continuous touch inputs applied to the two control lines.

The control unit may control the display unit to change a display direction of the image based on continuous touch inputs applied in directions opposite to each other along the two control lines.

The control unit may control the display unit to limit display of the selected image based on touch inputs applied in a direction approaching each other and intersecting with an extending direction of the two control lines.

The control unit may select a plurality of images adjacent to a control line based on a touch input applied along the control line, and the control unit may control the display unit to transform and display the plurality of images together based on a touch input applied to one control line adjacent to at least one of the plurality of images.

When the plurality of images are selected, the control unit may limit display of other control lines other than the one control line.

The plurality of images may correspond to a plurality of frames constituting a video, and the display unit may display a plurality of extending control lines for receiving touch inputs to control different display statuses.

Each of the plurality of control lines may be divided into regions corresponding to the plurality of frames, and the control unit may select the frame based on one region of the control line, the touch input being applied to the region.

There is also provided a method of controlling a mobile terminal, the method including displaying a plurality of images on a display unit, the plurality of images being separated from each other; receiving a touch input applied to a control space between the plurality of images; and changing a display status of an image selected based on the touch input.

The method may further include displaying a control image including a plurality of control lines in a control space.

Further scope of applicability of the present application will become more apparent from the detailed description given hereinafter. However, it should be understood that the detailed description and specific examples, while indicating preferred embodiments of the disclosure, are given by way of illustration only, since various changes and modifications within the spirit and scope of the disclosure will become apparent to those skilled in the art from the detailed description.

### BRIEF DESCRIPTION OF THE DRAWINGS

The accompanying drawings, which are included to provide a further understanding of the disclosure and are incorporated in and constitute a part of this specification, illustrate exemplary embodiments and together with the description serve to explain the principles of the disclosure.

In the drawings:
FIG. 1 is a block diagram showing a mobile terminal according to an embodiment of the present invention;
FIGS. 2A and 2B are conceptual views showing a communication system in which a mobile terminal is operable according to an embodiment of the present invention;
FIG. 3A is a front side perspective view of a mobile terminal related to the present invention;
FIG. 3B is a back side perspective view of the mobile terminal shown in FIG. 3A;
FIG. 4 is a flowchart showing a method of controlling a mobile terminal according to an embodiment of the present invention;
FIGS. 5A to 5C are conceptual views showing the control method shown in FIG. 4 according to various embodiments;
FIGS. 6A to 6C are conceptual views showing various control images;
FIGS. 7A to 7D are conceptual views showing a control method for transforming an image on the basis of touch inputs that are applied to a control region according to various embodiments of the present invention;
FIGS. 8A to 8C are conceptual views showing a control method for transforming and displaying at least one image selected from among a plurality of images;
FIG. 9 is a conceptual view showing a control method for deleting a selected image using a control line;
FIG. 10 is a conceptual view showing a control method for adjusting a display status of a frame of a video; and
FIG. 11 is a conceptual view showing a control method for changing a display status of one frame on a screen information window where a plurality of images are displayed according to another embodiment of the present invention.

### DETAILED DESCRIPTION OF THE DISCLOSURE

Description will now be given in detail according to the exemplary embodiments, with reference to the accompanying drawings. For the sake of brief description with reference to the drawings, the same or equivalent components will be provided with the same reference numbers, and description thereof will not be repeated. A suffix "module" or "unit" used for constituent elements disclosed in the following description is merely intended for easy description of the specification, and the suffix itself does not give any special meaning or function. In describing the present invention, if a detailed explanation for a related known function or construction is considered to unnecessarily divert the gist of the present disclosure, such explanation has been omitted but would be understood by those skilled in the art. The accompanying drawings are used to help easily understood the technical idea of the present invention and it should be understood that the idea of the present disclosure is not limited by the accompanying drawings.

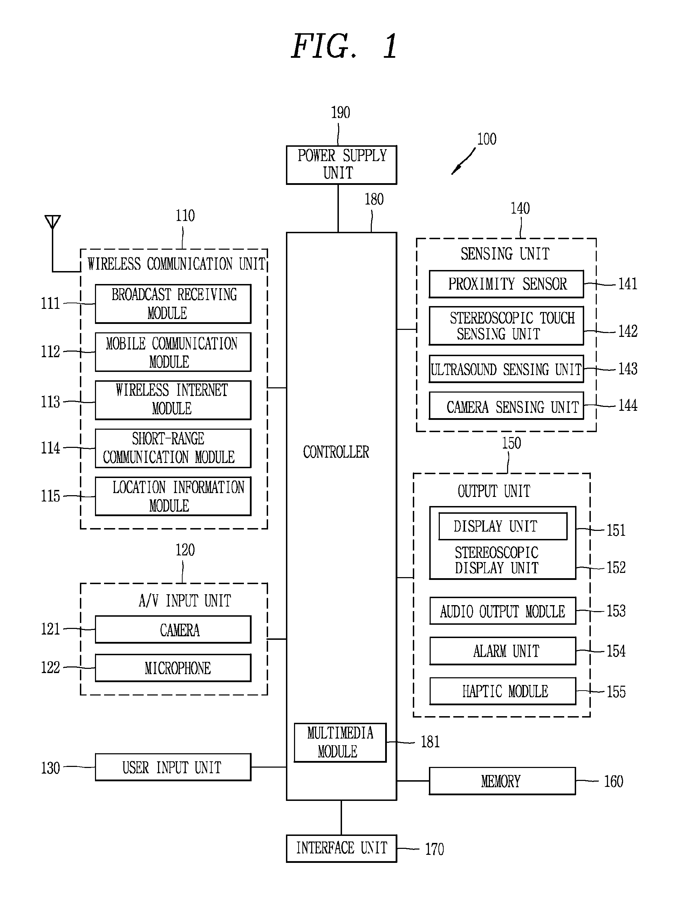

FIG. 1 is a block diagram of a mobile terminal 100 in accordance with one exemplary embodiment.

The mobile terminal 100 may comprise components, such as a wireless communication unit 110, an AudioNideo (AN) input unit 120, a user input unit 130, a sensing unit 140, an output unit 150, a memory 160, an interface unit 170, a controller 180, a power supply 190 and the like. FIG. 1 shows the mobile terminal 100 having various components, but it is understood that implementing all of the illustrated components is not a requirement. Greater or fewer components may alternatively be implemented.

Hereinafter, each component 110 to 190 is described in sequence.

The wireless communication unit 110 may typically include one or more modules which permit wireless communications between the mobile terminal 100 and a wireless communication system or between the mobile terminal 100 and a network within which the mobile terminal 100 is located. For example, the wireless communication unit 110 may include at least one of a broadcast receiving module 111, a mobile communication module 112, a wireless Internet module 113, a short-range communication module 114, a location information module 115 and the like.

The broadcast receiving module 111 receives a broadcast signal and/or broadcast associated information from an external broadcast managing entity via a broadcast channel.

The broadcast channel may include a satellite channel and a terrestrial channel. The broadcast managing entity may indicate a server which generates and transmits a broadcast signal and/or broadcast associated information or a server which receives a pre-generated broadcast signal and/or broadcast associated information and sends them to the mobile terminal. The broadcast signal may be implemented as a TV broadcast signal, a radio broadcast signal, and a data broadcast signal, among others. The broadcast signal may further include a data broadcast signal combined with a TV or radio broadcast signal.

Examples of broadcast associated information may include information associated with a broadcast channel, a broadcast program, a broadcast service provider, and the like. The broadcast associated information may be provided via a mobile communication network, and received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T) and the like. The broadcast receiving module 111 may be configured to be suitable for every broadcast system transmitting broadcast signals as well as the digital broadcasting systems.

Broadcast signals and/or broadcast associated information received via the broadcast receiving module 111 may be stored in a suitable device, such as a memory 160.

The mobile communication module 112 transmits/receives wireless signals to/from at least one of network entities (e.g., base station, an external mobile terminal, a server, etc.) on a mobile communication network. Here, the wireless signals may include audio call signal, video (telephony) call signal, or various formats of data according to transmission/reception of text/multimedia messages.

The mobile communication module 112 may implement a video call mode and a voice call mode. The video call mode indicates a state of calling with watching a callee's image. The voice call mode indicates a state of calling without watching the callee's image. The wireless communication module 112 may transmit and receive at least one of voice and image in order to implement the video call mode and the voice call mode.

The wireless Internet module 113 supports wireless Internet access for the mobile terminal. This module may be internally or externally coupled to the mobile terminal 100. Examples of such wireless Internet access may include Wireless LAN (WLAN) (Wi-Fi), Wireless Broadband (Wibro), Worldwide Interoperability for Microwave Access (Wimax), High Speed Downlink Packet Access (HSDPA) and the like.

The short-range communication module 114 denotes a module for short-range communications. Suitable technologies for implementing this module may include BLUETOOTH™, Radio Frequency IDentification (RFID), Infrared Data Association (IrDA), Ultra-WideBand (UWB), ZigBee™, Near Field Communication (NFC) and the like.

The location information module 115 denotes a module for detecting or calculating a position of a mobile terminal. An example of the location information module 115 may include a Global Position System (GPS) module or a wireless fidelity (WiFi) module.

Still referring to FIG. 1, the A/V input unit 120 is configured to provide audio or video signal input to the mobile terminal. The A/V input unit 120 may include a camera 121 and a microphone 122. The camera 121 receives and processes image frames of still pictures or video obtained by image sensors in a video call mode or a capturing mode. The processed image frames may be displayed on a display unit 151.

The image frames processed by the camera 121 may be stored in the memory 160 or transmitted to the exterior via the wireless communication unit 110. Also, user's position information and the like may be calculated from the image frames acquired by the camera 121. Two or more cameras 121 may be provided according to the configuration of the mobile terminal.

The microphone 122 may receive an external audio signal while the mobile terminal is in a particular mode, such as a phone call mode, a recording mode, a voice recognition mode, or the like. This audio signal is processed into digital data. The processed digital data is converted for output into a format transmittable to a mobile communication base station via the mobile communication module 112 in case of the phone call mode. The microphone 122 may include assorted noise removing algorithms to remove noise generated in the course of receiving the external audio signal.

The user input unit 130 may generate input data input by a user to control the operation of the mobile terminal. The user input unit 130 may include a keypad, a dome switch, a touchpad (e.g., static pressure/capacitance), a jog wheel, a jog switch and the like.

The sensing unit 140 provides status measurements of various aspects of the mobile terminal.

For instance, the sensing unit 140 may detect an open/close status of the mobile terminal, a change in a location of the mobile terminal 100, a presence or absence of user contact with the mobile terminal 100, the location of the mobile terminal 100, acceleration/deceleration of the mobile terminal 100, and the like, so as to generate a sensing signal for controlling the operation of the mobile terminal 100. For example, regarding a slide-type mobile terminal, the sensing unit 140 may sense whether a sliding portion of the mobile terminal is open or closed. Other examples include sensing functions, such as the sensing unit 140 sensing the presence or absence of power provided by the power supply 190, the presence or absence of a coupling or other connection between the interface unit 170 and an external device.

The output unit 150 is configured to output an audio signal, a video signal or a tactile signal. The output unit 150 may include a display unit 151, an audio output module 153, an alarm unit 154 and a haptic module 155.

The display unit 151 may output information processed in the mobile terminal 100. For example, when the mobile terminal is operating in a phone call mode, the display unit 151 will provide a User Interface (UI) or a Graphic User Interface (GUI), which includes information associated with the call. As another example, if the mobile terminal is in a video call mode or a capturing mode, the display unit 151 may additionally or alternatively display images captured and/or received, UI, or GUI.

The display unit 151 may be implemented using, for example, at least one of a Liquid Crystal Display (LCD), a Thin Film Transistor-Liquid Crystal Display (TFT-LCD), an Organic Light-Emitting Diode (OLED), a flexible display, a three-dimensional (3D) display, an e-ink display or the like.

Some of such displays 151 may be implemented as a transparent type or an optical transparent type through which the exterior is visible, which is referred to as 'transparent display'. A representative example of the transparent display may include a Transparent OLED (TOLED), and the like.

The display unit 151 may also be implemented as a stereoscopic display unit 152 for displaying stereoscopic images.

Here, the stereoscopic image may be a three-dimensional (3D) stereoscopic image, and the 3D stereoscopic image is an image refers to an image making a viewer feel that a gradual depth and reality of an object on a monitor or a screen is the same as a reality space. A 3D stereoscopic image is implemented by using binocular disparity. Binocular disparity refers to disparity made by the positions of two eyes. When two eyes view different 2D images, the images are transferred to the brain through the retina and combined in the brain to provide the perception of depth and reality sense.

The stereoscopic display unit 152 may employ a stereoscopic display scheme such as stereoscopic scheme (a glass scheme), an auto-stereoscopic scheme (glassless scheme), a projection scheme (holographic scheme), or the like. Stereoscopic schemes commonly used for home television receivers, or the like, include Wheatstone stereoscopic scheme, or the like.

The auto-stereoscopic scheme includes, for example, a parallax barrier scheme, a lenticular scheme, an integral imaging scheme, a switchable scheme, or the like. The projection scheme includes a reflective holographic scheme, a transmissive holographic scheme, or the like.

In general, a 3D stereoscopic image is comprised of a left image (a left eye image) and a right image (a right eye image). According to how left and right images are combined into a 3D stereoscopic image, the 3D stereoscopic imaging method is divided into a top-down method in which left and right images are disposed up and down in a frame, an L-to-R (left-to-right, side by side) method in which left and right images are disposed left and right in a frame, a checker board method in which fragments of left and right images are disposed in a tile form, an interlaced method in which left and right images are alternately disposed by columns and rows, and a time sequential (or frame by frame) method in which left and right images are alternately displayed by time.

Also, as for a 3D thumbnail image, a left image thumbnail and a right image thumbnail are generated from a left image and a right image of the original image frame, respectively, and then combined to generate a single 3D thumbnail image. In general, thumbnail refers to a reduced image or a reduced still image. The thusly generated left image thumbnail and the right image thumbnail are displayed with a horizontal distance difference therebetween by a depth corresponding to the disparity between the left image and the right image on the screen, providing a stereoscopic space sense.

As illustrated, a left image and a right image required for implementing a 3D stereoscopic image is displayed on the stereoscopic display unit 152 by a stereoscopic processing unit (not shown). The stereoscopic processing unit may receive the 3D image and extract the left image and the right image, or may receive the 2D image and change it into a left image and a right image.

Here, if the display unit 151 and a touch sensitive sensor (referred to as a touch sensor) have a layered structure therebetween (referred to as a 'touch screen'), the display unit 151 may be used as an input device as well as an output device. The touch sensor may be implemented as a touch film, a touch sheet, a touchpad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also touch pressure. Here, a touch object is an object to apply a touch input onto the touch sensor. Examples of the touch object may include a finger, a touch pen, a stylus pen, a pointer or the like.

When touch inputs are sensed by the touch sensors, corresponding signals are transmitted to a touch controller. The touch controller processes the received signals, and then transmits corresponding data to the controller 180. Accordingly, the controller 180 may sense which region of the display unit 151 has been touched.

Still referring to FIG. 1, a proximity sensor 141 may be arranged at an inner region of the mobile terminal 100 covered by the touch screen, or near the touch screen. The proximity sensor 141 may be provided as one example of the sensing unit 140. The proximity sensor 141 indicates a sensor to sense presence or absence of an object approaching to a surface to be sensed, or an object disposed near a surface to be sensed, by using an electromagnetic field or infrared rays without a mechanical contact. The proximity sensor 141 has a longer lifespan and a more enhanced utility than a contact sensor.

The proximity sensor 141 may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

When a touch sensor is overlaid on the stereoscopic display unit 152 in a layered manner (hereinafter, referred to as 'stereoscopic touch screen'), or when the stereoscopic display unit 152 and a 3D sensor sensing a touch operation are combined, the stereoscopic display unit 152 may also be used as a 3D input device.

As examples of the 3D sensor, the sensing unit 140 may include a proximity sensor 141, a stereoscopic touch sensing unit 142, an ultrasonic sensing unit 143, and a camera sensing unit 144.

The proximity sensor 141 detects the distance between a sensing object (e.g., the user's finger or a stylus pen) applying a touch by using the force of electromagnetism or infrared rays without a mechanical contact and a detect surface. By using the distance, the terminal recognizes which portion of a stereoscopic image has been touched. In particular, when the touch screen is an electrostatic touch screen, the degree of proximity of the sensing object is detected based on a change of an electric field according to proximity of the sensing object, and a touch to the 3D image is recognized by using the degree of proximity.

The stereoscopic touch sensing unit 142 is configured to detect the strength or duration of a touch applied to the touch screen. For example, the stereoscopic touch sensing unit 142 may sense touch pressure. When the pressure is strong, it may recognize the touch as a touch with respect to an object located farther away from the touch screen toward the inside of the terminal.

The ultrasonic sensing unit 143 is configured to recognize position information of the sensing object by using ultrasonic waves.

The ultrasonic sensing unit 143 may include, for example, an optical sensor and a plurality of ultrasonic sensors. The optical sensor is configured to sense light and the ultrasonic sensors may be configured to sense ultrasonic waves. Since light is much faster than ultrasonic waves, a time for which the light reaches the optical sensor is much shorter than a time for which the ultrasonic wave reaches the ultrasonic sensor. Therefore, a position of a wave generation source may be calculated by using a time difference from the time that the ultrasonic wave reaches based on the light as a reference signal.

The camera sensing unit 144 includes at least one of a camera 121, a photo sensor, and a laser sensor.

For example, the camera 121 and the laser sensor may be combined to detect a touch of the sensing object with respect to a 3D stereoscopic image. When distance information detected by a laser sensor is added to a 2D image captured by the camera, 3D information can be obtained.

In another example, a photo sensor may be laminated on the display device. The photo sensor is configured to scan a movement of the sensing object in proximity to the touch screen. In detail, the photo sensor includes photo diodes and transistors at rows and columns to scan content mounted on the photo sensor by using an electrical signal changing according to the quantity of applied light. Namely, the photo sensor calculates the coordinates of the sensing object according to variation of light to thus obtain position information of the sensing object.

The audio output module 153 may convert and output as sound audio data received from the wireless communication unit 110 or stored in the memory 160 in a call signal reception mode, a call mode, a record mode, a voice recognition mode, a broadcast reception mode, and the like. Also, the audio output module 153 may provide audible outputs related to a particular function performed by the mobile terminal 100 (e.g., a call signal reception sound, a message reception sound, etc.). The audio output module 153 may include a speaker, a buzzer or the like.

The alarm unit 154 outputs a signal for informing about an occurrence of an event of the mobile terminal 100. Events generated in the mobile terminal may include call signal reception, message reception, key signal inputs, a touch input etc. In addition to video or audio signals, the alarm unit 154 may output signals in a different manner, for example, using vibration to inform about an occurrence of an event. The video or audio signals may be also outputted via the audio output module 153, so the display unit 151 and the audio output module 153 may be classified as parts of the alarm unit 154.

A haptic module 155 generates various tactile effects the user may feel. A typical example of the tactile effects generated by the haptic module 155 is vibration. The strength and pattern of the haptic module 155 can be controlled. For example, different vibrations may be combined to be outputted or sequentially outputted.

Besides vibration, the haptic module 155 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 155 may be implemented to allow the user to feel a tactile effect through a muscle sensation such as fingers or arm of the user, as well as transferring the tactile effect through a direct contact. Two or more haptic modules 155 may be provided according to the configuration of the mobile terminal 100.

The memory 160 may store software programs used for the processing and controlling operations performed by the controller 180, or may temporarily store data (e.g., a phonebook, messages, still images, video, etc.) that are inputted or outputted. In addition, the memory 160 may store data regarding various patterns of vibrations and audio signals outputted when a touch is inputted to the touch screen.

The memory 160 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating the authority of using the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via the interface unit 170.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180.

The controller 180 may perform a pattern recognition processing to recognize a handwriting input or a picture drawing input performed on the touch screen as characters or images, respectively.

Also, the controller 180 may execute a lock state to restrict a user from inputting control commands for applications when a state of the mobile terminal meets a preset condition. Also, the controller 180 may control a lock screen displayed in the lock state based on a touch input sensed on the display unit 151 in the lock state of the mobile terminal.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein.

Software codes can be implemented by a software application written in any suitable programming language. The software codes may be stored in the memory 160 and executed by the controller 180.

Hereinafter, a communication system which is operable with the mobile terminal 100 according to the present disclosure will be described.

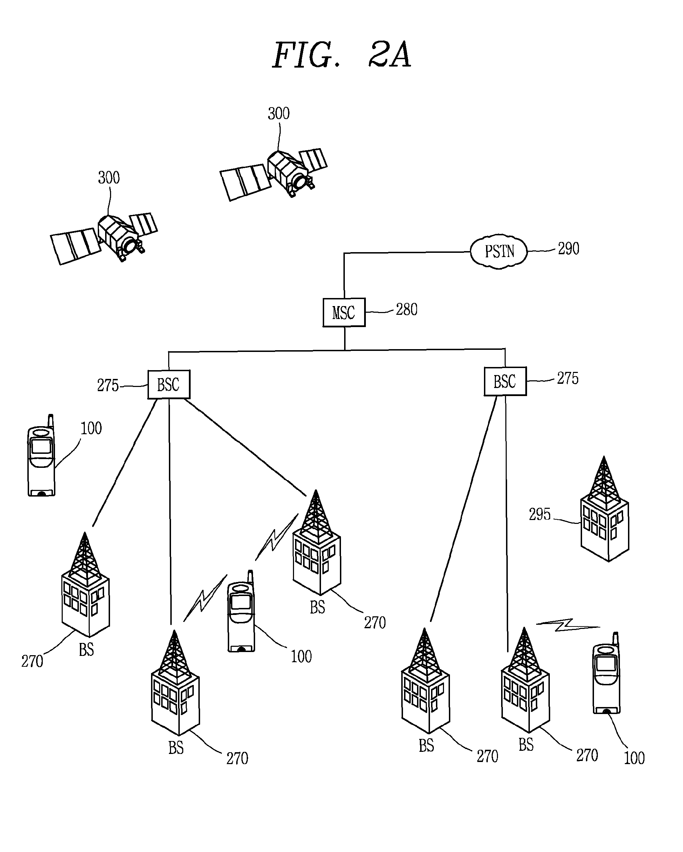

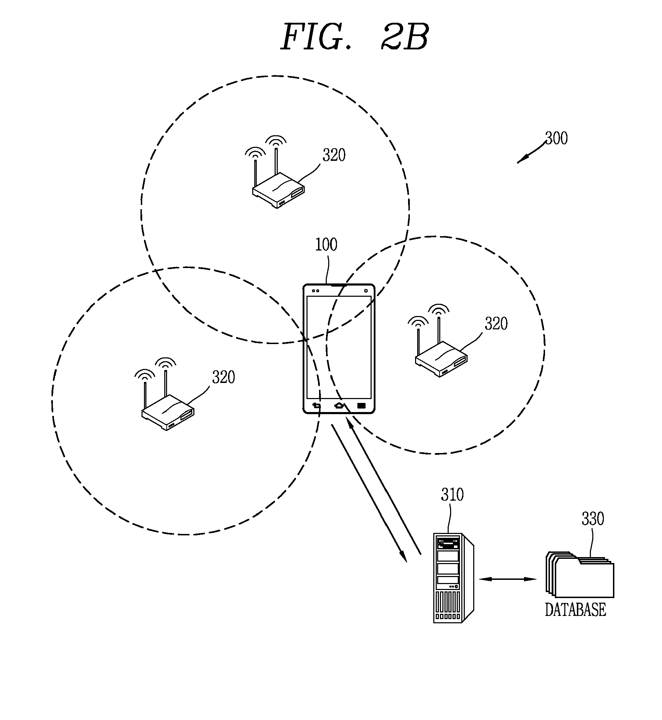

FIGS. 2A and 2B are conceptual views of a communication system operable with a mobile terminal 100 in accordance with the present disclosure.

First, referring to FIG. 2A, such communication systems utilize different air interfaces and/or physical layers. Examples of such air interfaces utilized by the communication systems include Frequency Division Multiple Access (FDMA), Time Division Multiple Access (TDMA), Code Division Multiple Access (CDMA), and Universal Mobile Telecommunications System (UMTS), the Long Term Evolution (LTE) of the UMTS, the Global System for Mobile Communications (GSM), and the like.

By way of non-limiting example only, further description will relate to a CDMA communication system, but such teachings apply equally to other system types including the CDMA wireless communication system.

Referring now to FIG. 2A, a CDMA wireless communication system is shown having a plurality of mobile terminals 100, a plurality of base stations (BSs) 270, base station controllers (BSCs) 275, and a mobile switching center (MSC) 280. The MSC 280 is configured to interface with a conventional Public Switch Telephone Network (PSTN) 290. The MSC 280 is also configured to interface with the BSCs 275. The BSCs 275 are coupled to the base stations 270 via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs 275 can be included in the system as shown in FIG. 2A.

Each base station 270 may include one or more sectors, each sector having an omni-directional antenna or an antenna pointed in a particular direction radially away from the base station 270. Alternatively, each sector may include two or more different antennas. Each base station 270 may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations 270 may also be referred to as Base Station Transceiver Subsystems (BTSs). In some cases, the term "base station" may be used to refer collectively to a BSC 275, and one or more base stations 270. The base stations may also be denoted as "cell sites." Alternatively, individual sectors of a given base station 270 may be referred to as cell sites.

A broadcasting transmitter (BT) 295, as shown in FIG. 2A, transmits a broadcast signal to the mobile terminals 100 operating within the system. The broadcast receiving module 111 (FIG. 1) is typically configured inside the mobile terminal 100 to receive broadcast signals transmitted by the BT 295.

FIG. 2A further depicts several Global Positioning System (GPS) satellites 300. Such satellites 300 facilitate locating the position of at least one of plural mobile terminals 100. Two satellites are depicted in FIG. 2A, but it is understood that useful position information may be obtained with greater or fewer satellites than two satellites. The GPS module 115 (FIG. 1) is typically configured to cooperate with the satellites 300 to obtain desired position information. It is to be appreciated that other types of position detection technology, (i.e., location technology that may be used in addition to or instead of GPS location technology) may alternatively be implemented. If desired, at least one of the GPS satellites 300 may alternatively or additionally be configured to provide satellite DMB transmissions.

During typical operation of the wireless communication system, the base stations 270 receive sets of reverse-link signals from various mobile terminals 100. The mobile terminals 100 are engaging in calls, messaging, and executing other communications. Each reverse-link signal received by a given base station 270 is processed within that base station 270. The resulting data is forwarded to an associated BSC 275. The BSC 275 provides call resource allocation and mobility management functionality including the orchestration of soft handoffs between base stations 270. The BSCs 275 also route the received data to the MSC 280, which then provides additional routing services for interfacing with the PSTN 290. Similarly, the PSTN 290 interfaces with the MSC 280, and the MSC 280 interfaces with the BSCs 275, which in turn control the base stations 270 to transmit sets of forward-link signals to the mobile terminals 100.

Hereinafter, description will be given of a method for acquiring location information of a mobile terminal using a wireless fidelity (WiFi) positioning system (WPS), with reference to FIG. 2B.

The WiFi positioning system (WPS) 300 refers to a location determination technology based on a wireless local area network (WLAN) using WiFi as a technology for tracking the location of the mobile terminal 100 using a WiFi module provided in the mobile terminal 100 and a wireless access point 320 for transmitting and receiving to and from the WiFi module.

The WiFi positioning system 300 may include a WiFi location determination server 310, a mobile terminal 100, a wireless access point (AP) 320 connected to the mobile terminal 100, and a database 330 stored with any wireless AP information.

The WiFi location determination server 310 extracts the information of the wireless AP 320 connected to the mobile terminal 100 based on a location information request message (or signal) of the mobile terminal 100. The information of the wireless AP 320 may be transmitted to the WiFi location determination server 310 through the mobile terminal 100 or transmitted to the WiFi location determination server 310 from the wireless AP 320.

The information of the wireless AP extracted based on the location information request message of the mobile terminal 100 may be at least one of MAC address, SSID, RSSI, channel information, privacy, network type, signal strength and noise strength.

The WiFi location determination server 310 receives the information of the wireless AP 320 connected to the mobile terminal 100 as described above, and compares the received wireless AP 320 information with information contained in the pre-established database 330 to extract (or analyze) the location information of the mobile terminal 100.

On the other hand, referring to FIG. 2B, as an example, the wireless AP connected to the mobile terminal 100 is illustrated as a first, a second, and a third wireless AP 320. However, the number of wireless APs connected to the mobile terminal 100 may be changed in various ways according to a wireless communication environment in which the mobile terminal 100 is located. When the mobile terminal 100 is connected to at least one of wireless APs, the WiFi positioning system 300 can track the location of the mobile terminal 100.

Next, considering the database 330 stored with any wireless AP information in more detail, various information of any wireless APs disposed at different locations may be stored in the database 330.

The information of any wireless APs stored in the database 330 may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like.

In this manner, any wireless AP information and location information corresponding to the any wireless AP are stored together in the database 330, and thus the WiFi location determination server 310 may retrieve wireless AP information corresponding to the information of the wireless AP 320 connected to the mobile terminal 100 from the database 330 to extract the location information matched to the searched wireless AP, thereby extracting the location information of the mobile terminal 100.

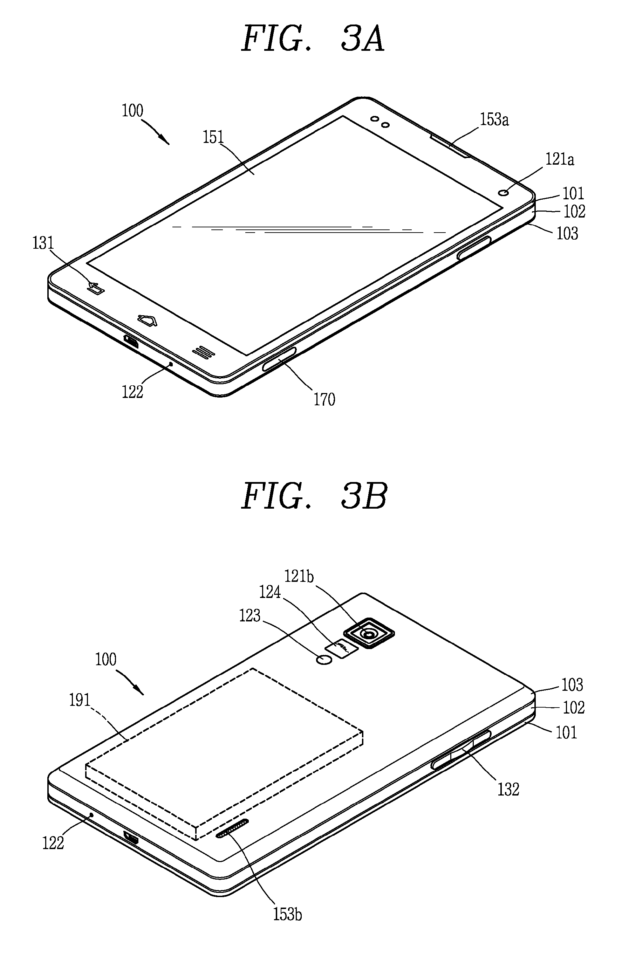

FIG. 3A is a front perspective view of the mobile terminal 100 according to an embodiment of the present invention.

The mobile terminal 100 according to the present disclosure is a bar type mobile terminal. However, the present disclosure is not limited to this, but may be applied to a watch type, a clip type, a glasses type, or a slide type in which two or more bodies are coupled to each other so as to perform a relative motion, a folder type, or a swing type, a swivel type and the like.

A case (casing, housing, cover, etc.) forming an outer appearance of the body may include a front case 101 and a rear case 102. A space formed by the front case 101 and the rear case 102 may accommodate various components therein. At least one intermediate case may further be disposed between the front case 101 and the rear case 102. A battery cover 103 for covering a battery 191 may be detachably mounted to the rear case 102.

Such cases may be formed by injection-molded synthetic resin, or may be formed using a metallic material such as stainless steel (STS) or titanium (Ti).

At the front case 101, may be disposed a display unit 151, a first audio output unit 153a, a first camera 121 a, a first user input unit 131, etc. On the side surfaces, may be disposed a microphone 122, an interface unit 170, a second user input unit 132, etc.

The display unit 151 may output information processed in the mobile terminal 100. The display unit 151 may be implemented using, for example, at least one of a Liquid Crystal Display (LCD), a Thin Film Transistor-Liquid Crystal Display (TFT-LCD), an Organic Light-Emitting Diode (OLED), a flexible display, a three-dimensional (3D) display, an e-ink display or the like.

The display unit 151 may include a touch sensing means to receive a control command by a touch method. When a touch is made to any one place on the display unit 151, the touch sensing means may be configured to sense this touch and enter the content corresponding to the touched place. The content entered by a touch method may be a text or numerical value, or a menu item capable of indication or designation in various modes.

The touch sensing means may be formed with transparency to allow visual information displayed on the display unit 151 to be seen, and may include a structure for enhancing the visibility of a touch screen at bright places. Referring to FIG. 3A, the display unit 151 occupies a most portion of the front surface of the front case 101.

The first audio output unit 153a and the first camera 121a are disposed in a region adjacent to one of both ends of the display unit 151, and the first manipulation input unit 131 and the microphone 122 are disposed in a region adjacent to the other end thereof. The second manipulation interface 132 (refer to FIG. 3B), the interface 170, and the like may be disposed on a lateral surface of the terminal body.

The first audio output module 153a may be implemented in the form of a receiver for transferring voice sounds to the user's ear or a loud speaker for outputting various alarm sounds or multimedia reproduction sounds.

It may be configured such that the sounds generated from the first audio output module 153a are released along an assembly gap between the structural bodies. In this case, a hole independently formed to output audio sounds may not be seen or hidden in terms of appearance, thereby further simplifying the appearance of the mobile terminal 100. However, the present invention may not be limited to this, but a hole for releasing the sounds may be formed on the window.

The first camera 121 a processes video frames such as still or moving images obtained by the image sensor in a video call mode or capture mode. The processed video frames may be displayed on the display unit 151.

The user input unit 130 is manipulated to receive a command for controlling the operation of the mobile terminal 100. The user input unit 130 may include a first and a second manipulation unit 131, 132. The first and the second manipulation unit 131, 132 may be commonly referred to as a manipulating portion, and any method may be employed if it is a tactile manner allowing the user to perform manipulation with a tactile feeling such as touch, push, scroll or the like.

In the present drawing, it is illustrated on the basis that the first manipulation unit 131 is a touch key, but the present disclosure may not be necessarily limited to this. For example, the first manipulation unit 131 may be configured with a mechanical key, or a combination of a touch key and a mechanical key.

The content received by the first and/or second manipulation units 131, 132 may be set in various ways. For example, the first manipulation unit 131 may be used to receive a command such as menu, home key, cancel, search, or the like, and the second manipulation unit 132 may receive a command, such as controlling a volume level being outputted from the first audio output module 153a, or switching into a touch recognition mode of the display unit 151.

The microphone 122 may be formed to receive the user's voice, other sounds, or the like. The microphone 122 may be provided at a plurality of places, and configured to receive stereo sounds.

The interface unit 170 serves as a path allowing the mobile terminal 100 to exchange data with external devices. For example, the interface unit 170 may be at least one of a connection terminal for connecting to an earphone in a wired or wireless manner, a port for near field communication (for example, an Infrared Data Association (IrDA) port, a Bluetooth port, a wireless LAN port, and the like), and a power supply terminal for supplying power to the mobile terminal 100. The interface unit 170 may be implemented in the form of a socket for accommodating an external card such as Subscriber Identification Module (SIM) or User Identity Module (UIM), and a memory card for information storage.

FIG. 3B is a rear perspective view illustrating mobile terminal 100 illustrated in FIG. 3A.

Referring to FIG. 3B, a second camera 121 b may be additionally mounted at a rear surface of the terminal body, namely, the rear case 102. The second camera 121b has an image capturing direction, which is substantially opposite to the direction of the first camera unit 121a (refer to FIG. 3A), and may have a different number of pixels from that of the first camera unit 121 a.

For example, it is preferable that the first camera 121a has a relatively small number of pixels enough not to cause difficulty when the user captures his or her own face and sends it to the other party during a video call or the like, and the second camera 121 b has a relatively large number of pixels since the user often captures a general object that is not sent immediately. The first and the second camera 121 a, 121b may be provided in the terminal body in a rotatable and popupable manner.

Furthermore, a flash 123 and a mirror 124 may be additionally disposed adjacent to the second camera 121 b. The flash 123 illuminates light toward an object when capturing the object with the second camera 121 b. The mirror 124 allows the user to look at his or her own face, or the like, in a reflected way when capturing himself or herself (in a self-portrait mode) by using the second camera 121 b.

A second audio output unit 153b may be additionally disposed at a rear surface of the terminal body. The second audio output unit 153b together with the first audio output unit 153a (refer to FIG. 3A) can implement a stereo function, and may be also used to implement a speaker phone mode during a phone call.

An antenna (not shown) for receiving broadcast signals may be additionally disposed at a lateral surface of the terminal body in addition to an antenna for making a phone call or the like. The antenna constituting part of the broadcast receiving module 111 (refer to FIG. 1) may be provided in the terminal body in a retractable manner.

A power supply unit 190 (refer to FIG. 1) for supplying power to the mobile terminal 100 may be mounted on the terminal body. The power supply unit 190 may be incorporated into the terminal body, or may include a battery 191 configured in a detachable manner on the outside of the terminal body. According to the drawing, it is illustrated that the battery cover 103 is combined with the rear case 102 to cover the battery 191, thereby restricting the battery 191 from being released and protecting the battery 191 from external shocks and foreign substances.

A display unit that is in an inactivated state according to an embodiment of the present invention displays predetermined screen information when a main body of a mobile terminal is moved. The phrase " state in which a display 151 is inactivated" used therein means that an internal light for illuminating the display unit 151 is turned off. That is, when the display unit 151 is inactivated, no information or graphic image is displayed on the display unit 151.

In other words, when the display unit 151 is inactivated, the control unit 180 may control the sensing unit 120 to sense a movement of the main body of the terminal and display screen information on the display unit 151 or switch the display unit 151 to be activated when the movement is sensed.

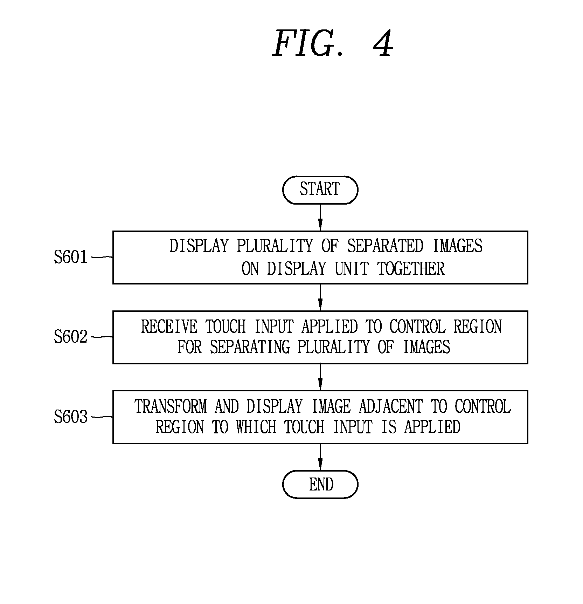

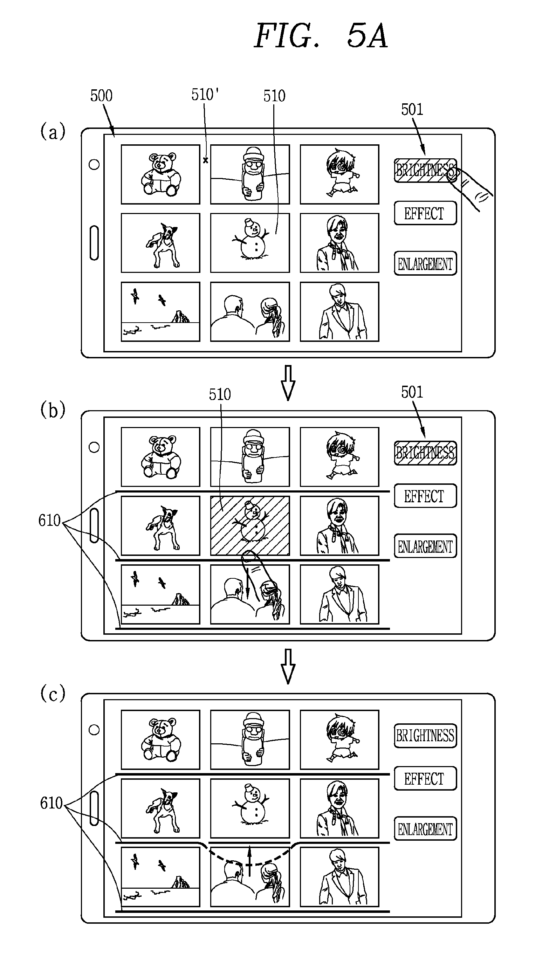

FIG. 4 is a flowchart showing a method of controlling a mobile terminal according to an embodiment of the present invention, and FIG. 5A is a conceptual view showing the control method shown in FIG. 4 according an embodiment of the present invention.

In operation S601, a plurality of images that are separated from one another are displayed together on the display unit 151. For example, screen information 600 displayed on the display unit 151 may correspond to an execution screen of a gallery application for displaying at least one image 510 that is photographed or stored using another path.

The display unit 151 may display a predetermined number of images 510 together. That is, the plurality of images 510 that are displayed together on the display unit 151 may be downsized and displayed in substantially the same size. The plurality of images 510 may be sequentially arranged according to a storage order, storage method, or capacity of the memory 160. In the drawing, nine images are shown to be displayed together. However, the present invention is not limited thereto.

That is, a larger or smaller number of images may be displayed together by a user's setting. For example, on the basis of a pinch-in or pinch-out type touch input while the screen information 500 is displayed, the control unit controls the display unit 151 to display a larger or smaller number of images.

Although not shown in the drawing, a user may apply a touch input to one of the plurality of images 510 to select the image. For example, the control unit may control the display unit 151 to display the image, to which the touch input is applied, on the entire display unit 151.

In addition, the control unit may control a function (for example, copy, deletion, editing, or movement) corresponding to the image by any other type of touch input (for example, a long touch input).

The plurality of images 510 are displayed separately from one another. That is, the plurality of images 510 are displayed to have separation spaces 510' which are spaced at a predetermined distance. The separation spaces 510' may be defined along edges of the images 510 and displayed in a predetermined color such as black.

According to an embodiment of the present invention, a touch input is applied to the separation space (hereinafter referred to as a control region) for separating the plurality of images in operation S602. Referring to (a) of FIG. 5A, the screen information 500 includes an editing menu 501 for editing the image. For example, a touch input for adjusting a brightness of the image, changing a display form of the image, enlarging or reducing the image, or changing a display direction of the image may be applied to the editing menu 501. The editing menu 501 includes a plurality of icons for receiving respective touch inputs for respective editing items. That is, when the plurality of images are displayed, the control unit 180 may control the display unit 151 to display the editing menu 501.

Alternatively, while the plurality of images are displayed, the control unit 180 may control the display unit 151 to display the editing menu 501 when a predetermined touch input is applied, or when any touch input is applied to the control region.

When a touch input is applied to the editing menu 501, the control unit 180 may control the display unit 151 to display a first control image 610 in the control region 510'. The first control image 610 may be displayed in the form of a line segment that extends along the control region 510'. However, the form is not limited thereto.

For example, when a brightness icon is selected from the editing menu 501 to adjust brightness, the form of the brightness icon is transformed and then displayed. Further, the control unit 180 controls the display unit 151 to display the first control image 610 for receiving a user's touch input in order to adjust the brightness.

However, the present invention is not limited to the above-described order. For example, a touch input may be applied to the brightness icon in order to adjust a display brightness of the image 510 while the first control image 610 is displayed. In this case, when a touch input is applied to an effect icon while the first control image 610 is displayed, a touch input for changing a display effect of the image may be applied to the first control image 610.

Referring to (b) of FIG. 5A, the first control image 610 includes a plurality of line segments extending in a horizontal direction between the images 510. When nine images are displayed on the display unit 151, the first control image 610 may include three line segments that are parallel to one another.

Alternatively, according to another embodiment of the present invention, the first control image 610 may not be displayed. For example, a touch input applied to the control space 510' between the images may be sensed. That is, with the first control image 610, a user may recognize a region where a touch input is to be applied.

In operation S603, the control unit 180 controls the display unit 151 to transform and display an image adjacent to the control region where the touch input is applied. Referring to (b) and (c) of FIG. 5A, the control unit 180 may control the display unit 151 to transform and display a brightness of one of the plurality of images on the basis of the touch input applied to the first control image 610 while the brightness icon is selected.

The image to be transformed and displayed is determined as at least one image adjacent to one region of the first control image 610, in which the touch input is applied. Referring to (b) and (c) of FIG. 5A, on the basis of a touch input that is applied to a central region of the first control image 610 in the second row on the display unit 151, a image (510; an image corresponding to the second row and second column) adjacent to the central region is darkly displayed.

In order to change the form of the image 510, the touch input applied to the first control image 610 may correspond to a continuous touch input. For example, the touch input type may correspond to a dragging type in which a touch input is first applied to the first control image 610 and continuously moved.

Although not shown in the drawing, the control unit 180 may control the display unit 151 to transform and display the first control image 610 when a touch input is applied to the first control image 610 or the control region 510' other than the image 510. Thus, a user may sense that the touch input has been applied to the first control image 610. Alternatively, when the touch input is applied to the control region 510' while the first control image 610 is not displayed, the display unit 151 may display the first control image 610 extending from a region where the touch input has been applied.

In order to transform the image 510, the dragging type touch input may be applied in a direction intersecting with an extending direction of the first control image 610. That is, the user may control a display brightness to make the image 510 brighter or darker by applying a touch input in both directions perpendicular to the extending direction.

Fore example, as shown in the drawing, a continuous touch input may be applied downward (with respect to the drawing) from a region of the first control image 610 adjacent to the image 510. In this case, the control unit 180 may control the display unit 151 to decrease a display brightness of the image 510 to make the image 510 darker.

Although not shown in the drawing, the control unit 180 may control the display unit 151 to increase the display brightness of the image 510 to make the image brighter when a continuous touch input is applied upward (with respect to the drawing) from a region of the first control image 610 adjacent to the image 510.

That is, a user may select a region of the first control image 610 to select an image to be transformed and displayed. Alternatively, the user may select a transforming method by applying continuous touch inputs having different directions to the first control image 610.

The display unit 151 may transform and display the first control image 610 on the basis of the continuous touch input applied to the first control image 610. That is, the display unit 151 may display one region of the first control image 610 in the form in which the region is stretched according to the continuously moved touch input. That is, the control unit 180 transforms and displays the first control image 610 in the form of a rubber band that is stretched in a direction where the touch input is moved.

Further, the display unit 151 may display the first control image 610 that is before the transformation as if the rubber band is restored by the elastic force when the touch input applied to the control image 610 is released. That is, the user may feel like the first control image is flicked by applying a touch input to some of the first control image 610 and may feel like the image selected is transformed by flicking the first control image 610.

Although not shown in detail in the drawing, when a touch input applied to the first control image 610 is released, the display unit 151 may display the first control image 610 that is vibrated while being moved back to its original position.

According to an embodiment of the present invention, a touch sensing unit of the display unit 151 receives a touch input applied to a control region between images while a plurality of images are displayed together. It is possible to select an image adjacent to the control region where the touch input is received and transform the selected image on the basis of a touch input scheme.

That is, it is possible to easily select one of the plurality images and to simply transform and display the selected image in a desired method without switching the screen.

In addition, a control image may be displayed between the plurality of images, thus allowing a user to easily recognize a touch region. The control image may be transformed in an elastic form according to a touch input of a user, thus providing the user with a feeling like flicking an elastic material.

As described above, the image may be transformed in various methods on the basis of selection of one icon from the editing menu 501. Various modifications of the image will be described below.

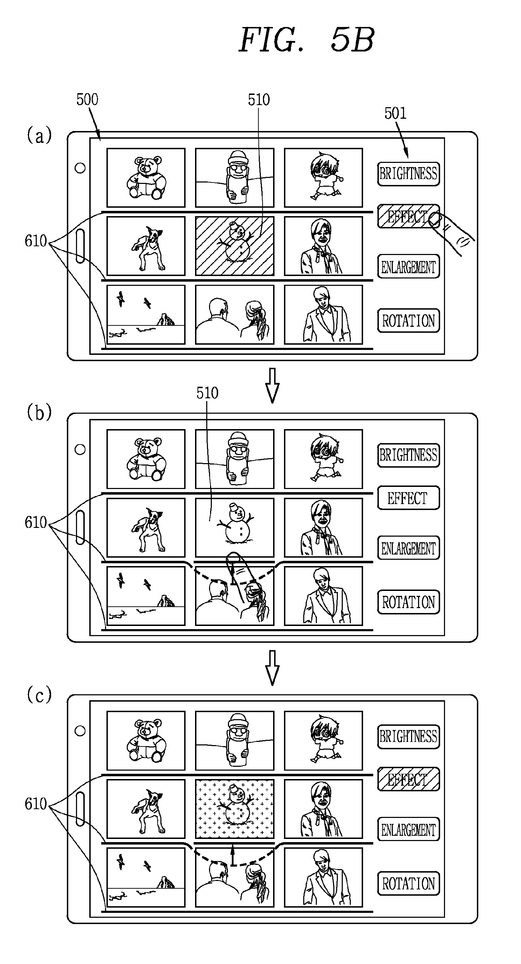

FIGS. 5B to 5C show a control method for transforming an image in various methods using a control image. Other than the form in which the image is transformed, a touch input applied to the first control image and a control method for the same, and a control method for displaying the first control image are substantially the same as described in FIG. 5A. Therefore, a repeated description thereof will be described.

Referring to FIG. 5B, the control unit 180 may control the display unit 151 to display a first control image 610 on the basis of selection of an effect icon from the editing menu 501. The form of the first control image 610 may be substantially the same as or different from that of when another icon is selected from the editing menu 501.

The control unit 180 selects one of the plurality of images on the basis of one region of the first control image 610, in which a touch input is applied. The control unit 180 may control the display unit 151 to apply a predetermined effect to the selected image on the basis of the continuous touch input that are applied to the first control image 610 and then to display the image to which the predetermined effect is applied.

Here, the term "effect" means a variety of transforming method for displaying an image. That is, different display methods are determined to provide a user with different feelings by adjusting brightness, chroma, and sharpness and applying various filters.

The control unit 180 may define a predetermined number of effects. In addition, the control unit 180 controls the display unit 151 to apply one of effects, which are sequentially listed, on the basis of a one-directional touch input applied to the first control image 610 and to display the image 510.

Further, the control unit 180 controls the display unit 151 to apply a next effect and to display the image 510 when a one-directional touch input is applied to the first control image 610 again. Although not shown in the drawing, the display unit 151 may apply the effects that are sequentially listed to the image on the basis of the touch input that is repeatedly applied and display the image.

In addition, the control unit 180 may control the display unit 151 to apply a previous effect and to display the image 510 when an opposite directional touch input is applied to the first control image 610.

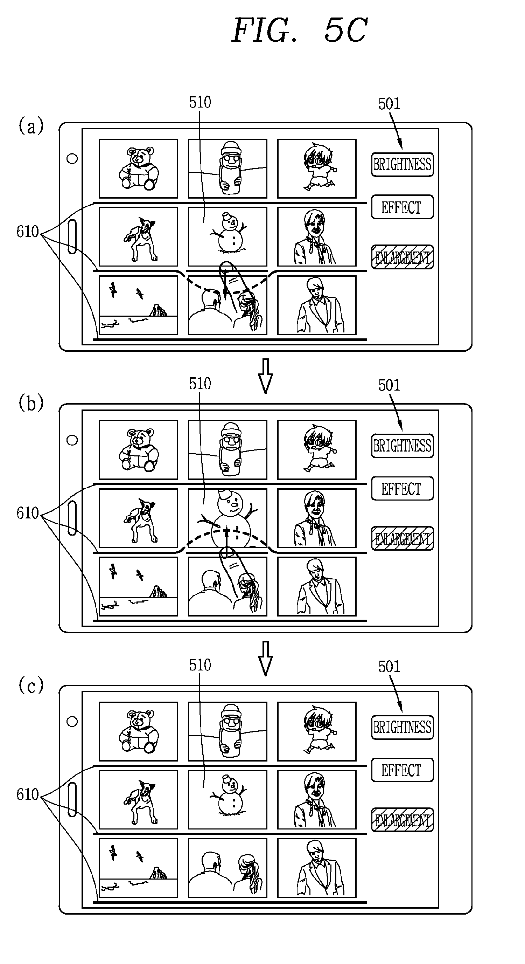

A control method for enlarging or reducing an image on the basis of a touch input applied to the first control image will be described with reference to FIG. 5C. The control unit 180 may control the display unit 151 to enlarge and display the image 510 on the basis of an one-directional continuous touch input applied to the first control image 610.

However, a size on the display unit 151 on which the image 510 is displayed is constant. That is, the display unit 151 displays an enlarged region of the image 510 on the basis of the touch input.

The display unit 151 may reduce and display the image on the basis of an opposite directional touch input applied to the first control image 610. In this case, a region of the display unit 151 on which the image 510 is displayed is also constant. That is, the control unit 180 may control the display unit 151 to entirely reduce the image 510 and to display the reduced image 510 to an existing display region.

Thus, a user may be provided with one image having an enlarged or reduced region while a plurality of images are displayed together.

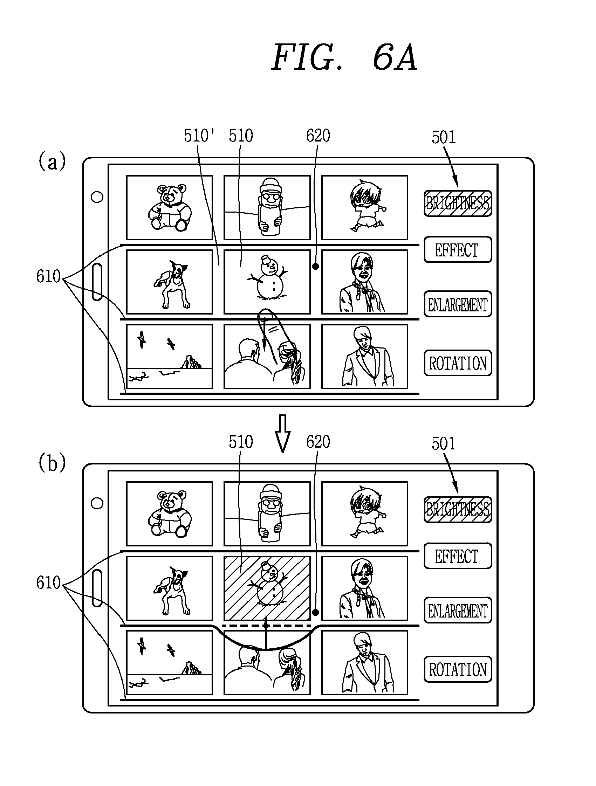

FIGS. 6A to 6C are conceptual views showing various control images.

A second image that is displayed to indicate a degree of control of an image will be described with reference to FIG. 6A. When one icon is selected from the editing menu 501, the display unit 151 displays the first control image 610 having a form of a line segment extending in one direction. As shown in the drawings, the first control image 610 is in a line segment extending in a horizontal direction, and may be displayed in a control region 510' adjacent to respective bottom edges of the plurality of images.

The control unit 180 controls the display unit 151 to display a status indication point 620 in a control region adjacent to respective side edges of the plurality of images along with the first control image 610. The status indication point 620 may have the form of a dot. However, the form is not limited thereto.

The statue indication point 620 is displayed at a position for indicating a degree of control corresponding to a function of an icon selected from the editing menu, with respect to a side length of each image. For example, when the brightness icon is selected, if one region of the first control image 610 is touched, the status indication point 620 is displayed on the basis of a degree of brightness of the image selected by the control image 610. For example, the status indication point 620 may be displayed to a right side of the selected image. The status indication point is displayed close to a top of the image 510 when the image 510 is bright and is displayed close to a bottom of the image 510 when the image 510 is dark.

However, the present invention is not limited thereto. For example, when a touch input is applied to the brightness icon, a plurality of status indication points 620 may be displayed to indicate brightness for all images that are displayed on the display unit 151.

In addition, when brightness of the image 510 is adjusted on the basis of the touch input applied to the first control image 610, a position of the statue display point 620 is moved corresponding to the adjusted brightness.

Thus, a user may recognize a degree of transformation of a display status of the image on the basis of the status indication point 620 having a position transformed on the basis of the touch input applied to the first control image 610.

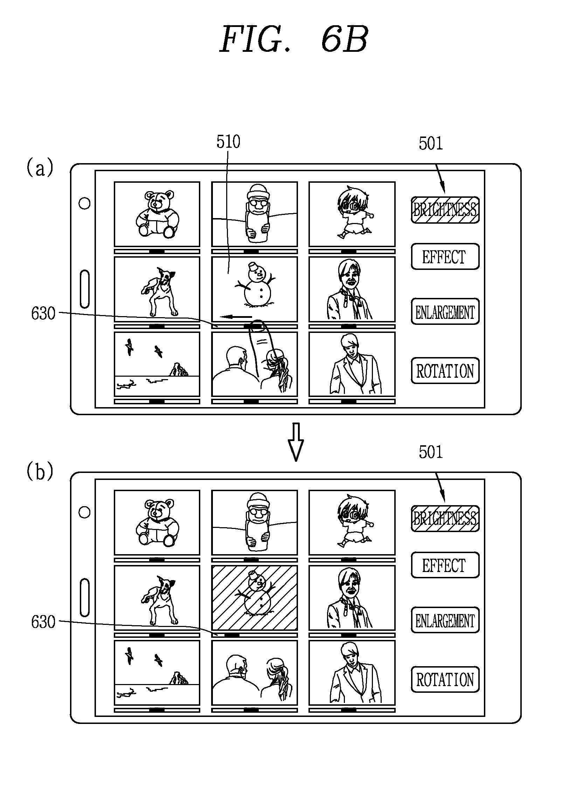

The third control image 630 having a form different from the first control image will be described with reference to FIG. 6B. Except the form of the third control image 630, a control method using the third control image 630 is substantially the same as the control method using the first control image 610. Thus, a repeated description thereof will be omitted.

The third control image 630 may have the form of a scroll bar and be provided in a plural number corresponding to respective images. As shown in the drawings, the third control image 630 may extend in a horizontal direction with respect to the images 510 and may be formed to correspond to a width of respective images 510.

The third control image 630 includes a scroll box for indicating statuses of respective images corresponding to control items selected from the editing menu 501. For example, the scroll box is displayed on a position for indicating brightness of respective images with respect to the length of the scroll bar.

The control unit 180 may transform the image on the basis of a user's touch input that applied to the scroll box. That is, the touch input applied to the third control image 630 may correspond to a continuous touch that reciprocates along an extending direction in which the scroll bar is formed.

The control unit 180 selects an image 150 corresponding to the third control image 630 where a user's touch is applied. The control unit 180 may control the display unit 151 to transform and display the image on the basis of a touch input that is continuously applied to the third control image 630. In addition, the display unit 151 moves and displays the scroll box on the basis of the continuous touch input.

Thus, a user may recognize a display status of each image on the basis of a position of the scroll box and facilitate control of a display of an image by applying the touch input to a scroll bar-formed third image.

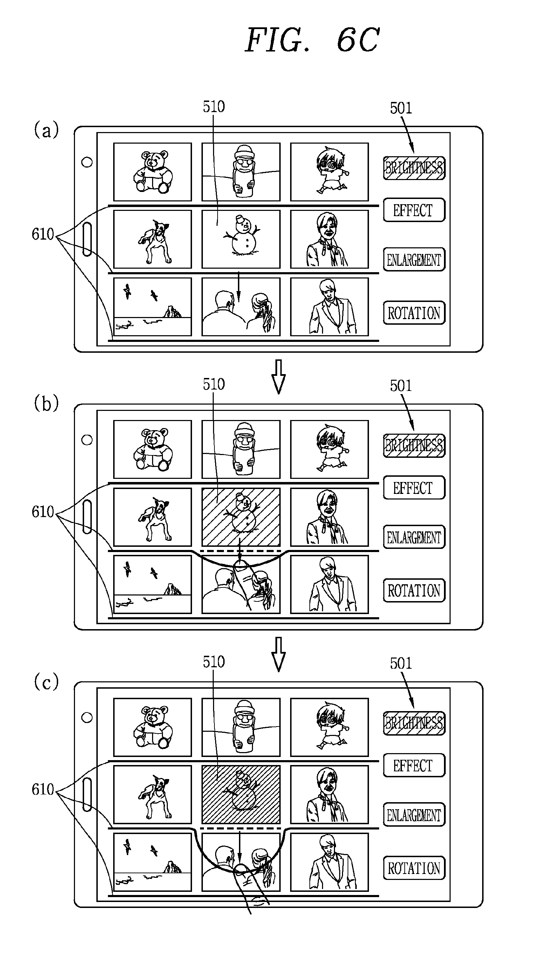

A method of controlling a degree of transformation of an image on the basis of a degree of touch input applied to the first control image will be described with reference to FIG. 6C.

The control unit 180 transforms and displays the image 510 when one icon is selected from the editing menu 501 and a continuous touch input is applied to the first control image.

The control unit 180 may control the display unit 151 to transform and display the image 510 on the basis of a degree of transformation corresponding to a movement range of the touch input that is continuously applied to the first control image 610. That is, the degree of transformation is defined to increase as the movement range increases.

For example, when brightness of an image is selected to be adjusted, the degree of transformation is defined to increase as the movement range of the continuous touch input applied to the first control image 610 increases. Thus, as a distance from a region of the first control image 610 to which the touch input is first applied to a region to which the touch input is released increases, the brightness changes significantly.

Thus, a user may significantly transform and display the image on the basis of a one-time touch input applied to the first control image.

In addition, the display unit 151 transforms and displays the first control image to form a portion of the first control image 610 in a touch region that is in contact with the display unit 151 on the basis of a touch input that is moved on the display unit 151. That is, the first control image 610 is stretched by the touch input.

Thus, the user may predict a degree of transformation of an image on the basis of a degree of transformation of the first control image 610.

Although not shown in the drawing, when the transformation of an effect in which the image is displayed in a predetermined number is selected, the control unit 180 may select one of sequential effects in proportion to a movement range of a touch input applied to the first control image 610.

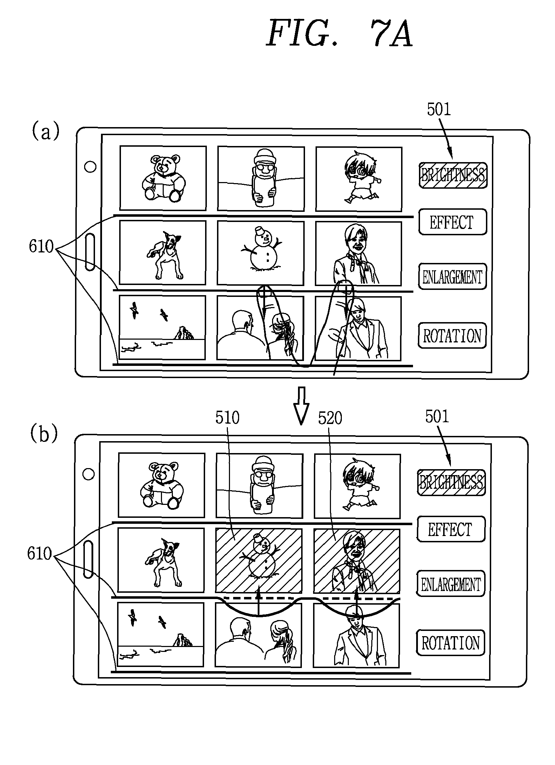

FIGS. 7A to 7D are conceptual views showing a control method for transforming an image on the basis of touch inputs that are applied to a control region according to various embodiments of the present invention.

A control method for transforming and displaying a plurality of images substantially simultaneously will be described with reference to FIG. 7A. According to an embodiment of the present invention, a plurality of touch inputs may be applied to different regions of the first control image 610.

When the plurality of touch inputs are applied to specific regions of the first control image 610, the control unit 180 selects first and second images 510 and 512 corresponding to respective touch inputs. In the drawings, the first and second images 510 and 512 are shown to be disposed adjacent to each other. However, the present invention is not limited thereto.

When a plurality of touch input is applied to the first control image 610 and one image is selected by the plurality of touch input, the control unit 180 senses the plurality of touch inputs as one touch input.

When the first and second images 510 and 512 are selected on the basis of the plurality of touch inputs, the control unit 180 controls the first and second images 510 and 512 independently on the basis of the respective touch input.

That is, display of the respective image is controlled on the basis of the respective touch inputs, which do not affect each other. The control unit 180 may control the display unit 151 to transform and display the first and second images 510 and 512 on the basis of independent touch inputs applied to a plurality of regions of the first control image 610.

That is, a user may transform and display a plurality of images substantially simultaneously by applying touch inputs to a plurality of regions of the first control image 610 at the same time.

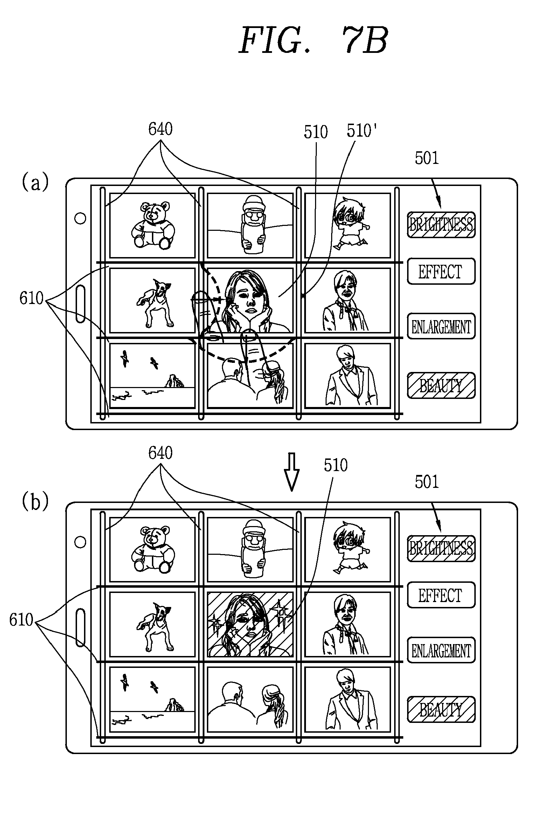

A control method for displaying a plurality of control images corresponding to a selected plurality of editing items will be described with reference to FIG. 7B. The control unit 180 may select a plurality of editing items together on the basis of touch inputs applied to a plurality of icons in the editing menu 501.

The control unit 180 controls the display unit 151 to display a plurality of control images corresponding to the selected plurality of editing items. The plurality of control images are displayed in the control region 510' that is formed between the images.

For example, a brightness item and a beauty item may be selected by a user's touch input. Here, the beauty item is used to apply an effect for making a person look more beautiful to an image and display the image on the basis of a predetermined criteria (for example, a face of the person is brighter, a region of the face is dimmer, eyes of the face is larger).

The first control image 610 corresponding to the brightness item is displayed in a control region 510' adjacent to a bottom edge of the image 510, and formed to extend in a horizontal direction. In addition, the fourth control image 640 corresponding to the beauty item is displayed in a control region 510' adjacent to a left side edge of the image, and formed to extend in a vertical direction. The first control image 610 and the fourth control image 640 may have different forms from each other. For example, the first and fourth control images 610 and 640 may be displayed in different colors from each other.

On the basis of the touch inputs applied to the first and fourth control images 610 and 640, the control unit 180 may control the display unit 151 to transform and display the selected image according to items corresponding to respective control images.

For example, while the first and fourth control images 610 and 640 are displayed, the control unit 180 transforms and displays the selected image on the basis of the touch inputs applied to the control images. Alternatively, the control unit 180 may select different images on the basis of one region of the touch input applied to the control image.

Although not shown in detail in the drawings, when a touch input is applied to an icon corresponding to the selected item again, the control unit 180 may control the display unit 151 to release the selection and limit the display of a corresponding control image.

Thus, the display unit 151 may display control images for different items and may transform and display the selected image according to the respective items by applying the touch input to the respective control images.

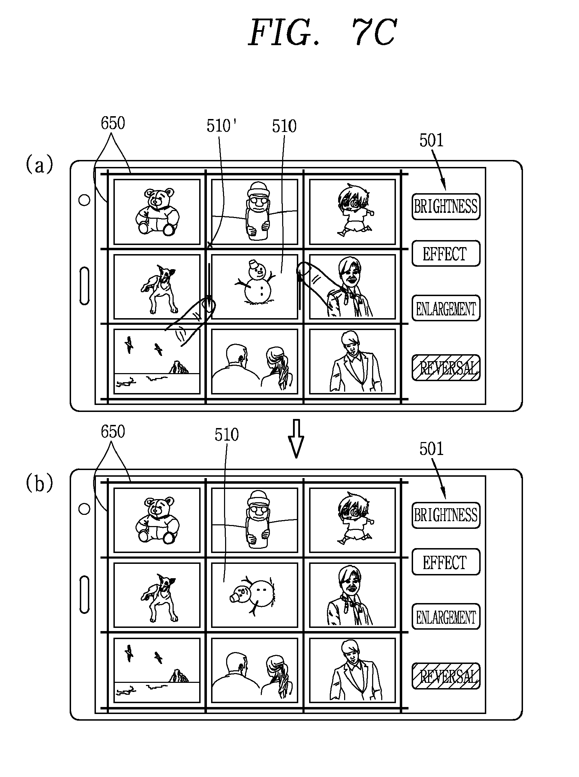

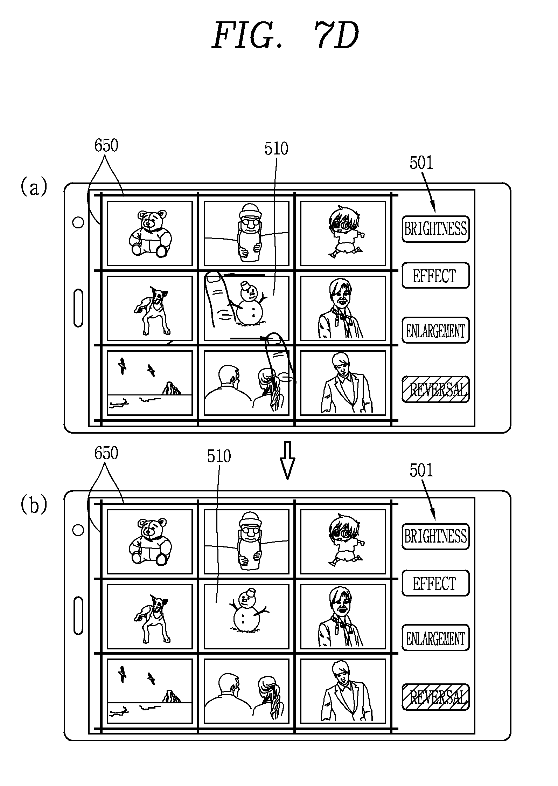

A control method for changing a rotational direction of an image on the basis of a touch input applied to a control image will be described with reference to FIGS. 7C and 7D.

The editing menu 501 includes a rotation/reversal item for rotating a display direction of the image or reversing the image. When a touch input is applied to the rotation/reversal icon, the control unit 180 controls the display unit 151 to display a fifth control image 650 that extends in directions intersecting with each other and that are displayed in the control region 510'. The fifth control image 650 may be formed in the form of a plurality of line segments that extend in directions perpendicular to each other to surround the image.

Referring to FIG. 7C, the control unit 180 selects an image 510 displayed between two regions on the basis of a touch input that is applied together to the two regions of the fifth control images 650 adjacent to left and right sides of the image 510.

The control unit 180 may rotate a display direction of the image 510 at a 90 degree angle on the basis of a continuous touch input that is applied in opposite directions in the two regions and display the rotated image. Here, the opposite directions correspond to an extending direction of the fifth control image having the form of the line segment. That is, the touch inputs applied to the two regions are applied in the same rotational direction with respect to the image, and the display unit 151 rotates the image at a 90 degree angle in the rotational direction and display the rotated image.

Referring to FIG. 7D, the control unit 180 selects the image 510 displayed between the two touch inputs on the basis of the respective touch inputs applied to two line segments that extend in a horizontal direction. The control unit 180 may control the display unit 151 to reverse and display the image on the basis of continuous touch inputs that are applied in opposite directions with respect to the selected image 510. Here, the two opposite directions correspond to an extending direction of the fifth control image having the form of the line segment.

According to an embodiment of the present invention, it is possible to select one image on the basis of two touch inputs applied to two line segments that are displayed in parallel to each other and to change the display direction of the image on the basis of the touch inputs having opposite directions.

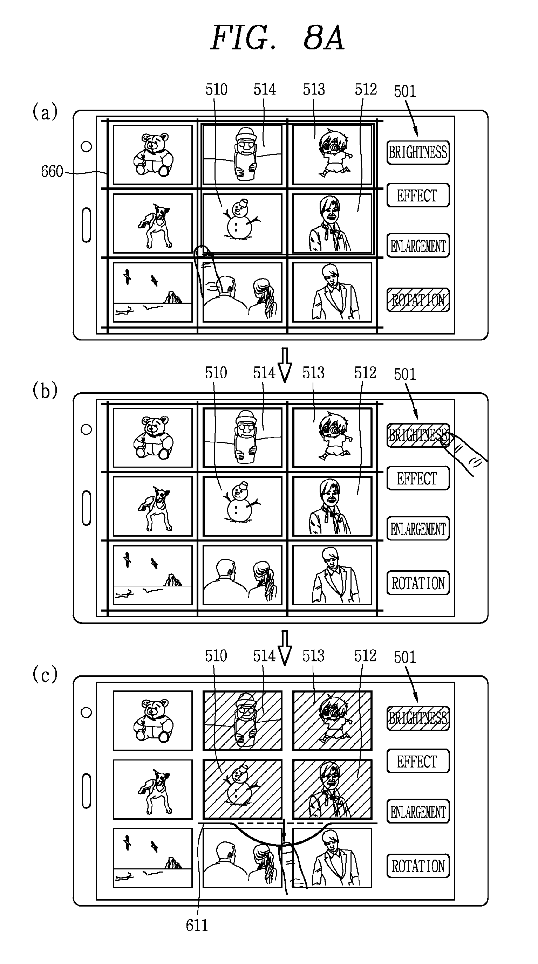

FIGS. 8A to 8C are conceptual views showing a control method for transforming and display at least one image selected from among a plurality of images.

A control method when a selected image is displayed on an adjacent region will be described with reference to FIG. 8A. When a continuous touch input moved along the sixth control image 660 forms a closed loop (that is, the touch input is released in the region to which the touch input has initially been applied) while the sixth control image 660 is displayed, the control unit 180 may select at least one image displayed inside the closed loop. That is, at least one image selected by the continuous touch input is disposed adjacent to each other.

When first to fourth images 510, 512, 513, and 514 are selected by a continuous touch input applied along the sixth control image 660, the control unit 180 controls the display unit 151 to highlight the first to fourth images 510, 512, 513, and 514. For example, the display unit 151 may increase a border thickness of the first to fourth images 510, 512, 513, and 514.

Referring to (b) and (c) of FIG. 8A, the control unit 180 may select one editing item on the basis of a touch input applied to the editing menu 501. For example, an icon for adjusting brightness may be selected on the basis of a touch input applied to one icon.

When a touch input is applied to one icon, the control unit 108 controls the display unit 151 to suppress a display of the sixth image 660 and to display a first transformed image 611.

The first transformed image 611 may have the form of a line segment extending in one direction.

The first transformed image 611 may be a portion of the sixth control image 660 that forms the closed loop. For example, the first transformed image 611 may be formed along the edges of the plurality of images to extend in one direction. That is, the first transformed image 611 may be displayed to have the form of a line segment extending in a horizontal direction along bottom edges of the first and second images 510 and 5112.

The control unit 180 may control the display unit 151 to transform and display the first to fourth images 510, 512, 513, and 514 on the basis of a touch input applied to the first transformed image 611. Here, the touch input may correspond to a continuous touch input applied in a direction intersecting with an extending direction of the first transformed image 611.

However, when the first transformed image 611 has the form of a scroll bar, the touch input may correspond to a continuous touch input moved along an extending direction of the first transformed image 611.

The control unit 180 controls the display unit 151 to adjust brightnesses of the first to fourth images 510, 512, 513, and 514 at one time on the basis of the touch input and to display the first to fourth images 510, 512, 513, and 514 having the adjusted brightnesses. For example, when the brightnesses of the first to fourth images 510, 512, 513, and 514 are the same as one another, brightnesses of the transformed first to fourth images 510, 512, 513, and 514 are substantially the same.

When the brightnesses of the first to fourth images 510, 512, 513, and 514 are different from one another, the control unit 180 may adjust the brightnesses on the basis of substantially the same degree of transformation according to a movement range of the touch input applied to the first transformed image 611. That is, the transformed images may be displayed to have different brightnesses from one another.

That is, a user may select a plurality of images adjacent to one another based of the displayed control image and adjust display statuses of the images at one time.

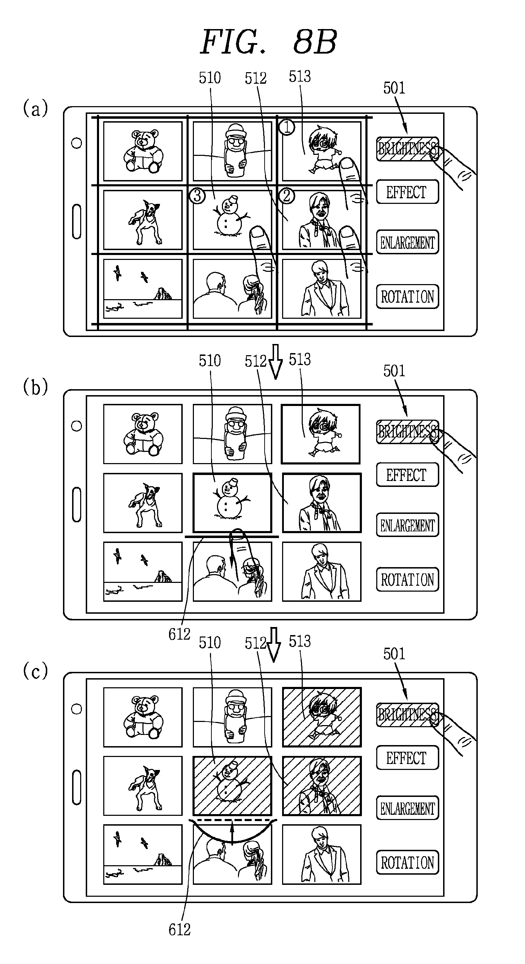

A control method for adjusting display statuses of a selected plurality of images at one time will be described with reference to FIG. 8B. Referring to (a) of FIG. 8B, when one item is selected from the editing menu 501, the control unit 180 may select some of a plurality of images having touch inputs applied thereto. When the touch input is applied, the control unit 180 selects an image having the touch input applied thereto and highlights the image to indicate that the image has been selected. For example, the display unit 151 increases a border thickness of the image selected on the basis of the touch input.

Thus, a user may select independent images that spaced apart from one another. In the drawings, the first to third images 510, 512, and 513 are shown to be adjacent to each other. However, according to an embodiment of the present invention, a user may select a plurality of images that are displayed to be spaced apart such that the plurality of images may not share the side with one another on the basis of a touch input applied to the images.

The control unit 180 controls the display unit 151 to display a second transformed image 612 to be adjacent to one of the plurality of images. For example, the display unit 151 displays the second transformed image 612 to be adjacent to an image that is finally selected (that is, an image having a final touch input applied thereto).

The second transformed image 612 corresponds to a length of one side of one image. For example, the second transformed image 612 is formed along a bottom side of the first image 510.

Referring to (b) and (c) of FIG. 8B, the control unit 180 controls the display unit 151 to transform and display the first to third images 513, 512, and 513 on the basis of a touch input applied to the second transformed image 612.

The display unit 151 may transform and display the second transformed image 612 on the basis of a touch input applied to the second transformed image 612 that is displayed adjacent to the first image 510. In addition, the display unit 151 may display the original state of the second transformed image 612 when a touch input applied to the second transformed image 612 is released.

According to an embodiment of the present invention, the control unit 180 may select a plurality of images that are not adjacent to one another and may transform and display a plurality of images selected together by applying a touch input to a transformed image that is displayed adjacent to one image.

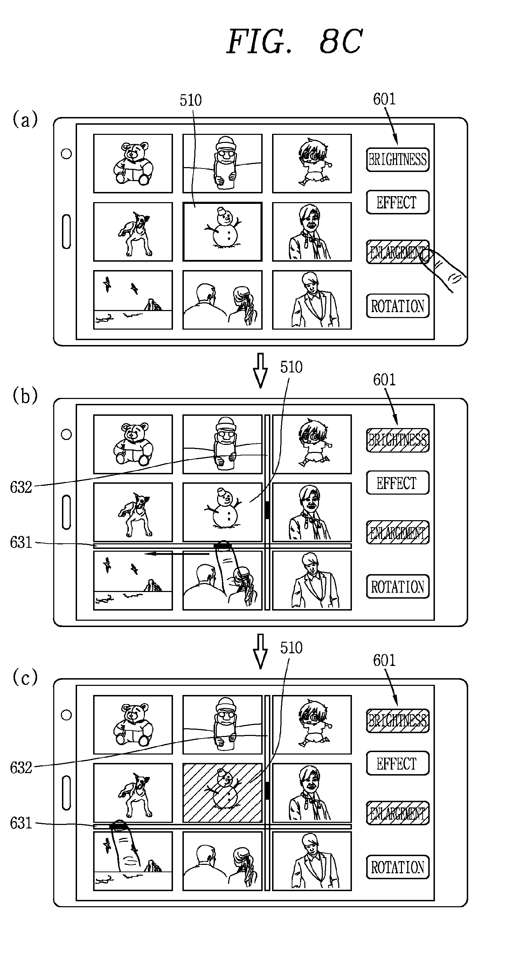

A control method using a third transformed image corresponding to one image will be described with reference to FIG. 8C. When one adjustment item is selected and then one image is selected on the basis of a user's touch input, the control unit 180 may control the display unit 151 to highlight the selected image.

Further, when another adjustment item is selected from the editing menu 501, the control unit 180 controls the display unit 151 to display third and fourth transformed images 631 and 632. The third and fourth transformed images 631 and 632 correspond to the selected two adjustment items. For example, when brightness and enlargement items are selected from the editing menu 501, the third transformed image 631 may correspond to the brightness item, and the fourth transformed image 632 may correspond to the enlargement item.

The third and fourth transformed images 631 and 632 may have one intersection and extend in width and length directions of the display unit 151. For example, the third and fourth transformed images 631 and 632 may be formed in the form of a scroll bar.

The third and fourth transformed images 631 and 632 may be formed to be longer than the width and the length of the selected image 510. However, only the image 510 is transformed and displayed on the basis of the touch input applied to the third and fourth transformed images 631 and 632.

Thus, a user may easily transform and display an image using the control image that formed to be long.

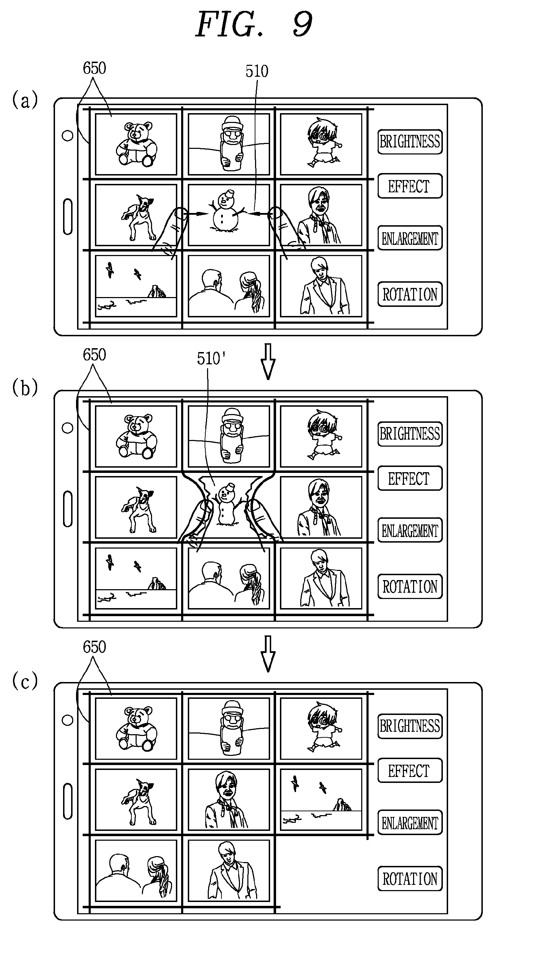

FIG. 9 is a conceptual view showing a control method for deleting a selected image using a control line. The display unit 151 displays the fifth control image 650, and the fifth control image 650 is formed in the control region 510' between the images 510. The fifth control image 650 has the form of a plurality of line segments that intersect with one another.

When touch inputs are applied to two line segments that face each other of the fifth control image 650, the control unit 180 selects an image 510 that is displayed between the two line segments. The touch inputs applied to the fifth control image 650 may correspond to touch inputs that are moved in a direction approaching each other. The control unit 180 controls the display unit 151 to display the image 510 as a transformed image 510' on the basis of the touch inputs moved in a direction approaching to each other. The transformed image 510' may be implemented in the form in which a paper is crumpled as the touch inputs applied to the two regions approach each other. In addition, the display unit 151 may transform a region of the fifth control image 650, in which the touch input is applied, into a form in which the region is stretched, and display the transformed region.

When the both touch inputs applied to the fifth control image 650 are closer than a predetermined distance, the control unit 180 may control the memory 160 to delete the selected image 510. In addition, the display unit 151 may limit display of the selected image 510 and change an arrangement of the remaining images that have been displayed on the display unit 151.

According to an embodiment of the present invention, a user need not touch a separate graphic image in order to delete an image, can get a feeling that he/or she crushes the image, and may delete the image easily.

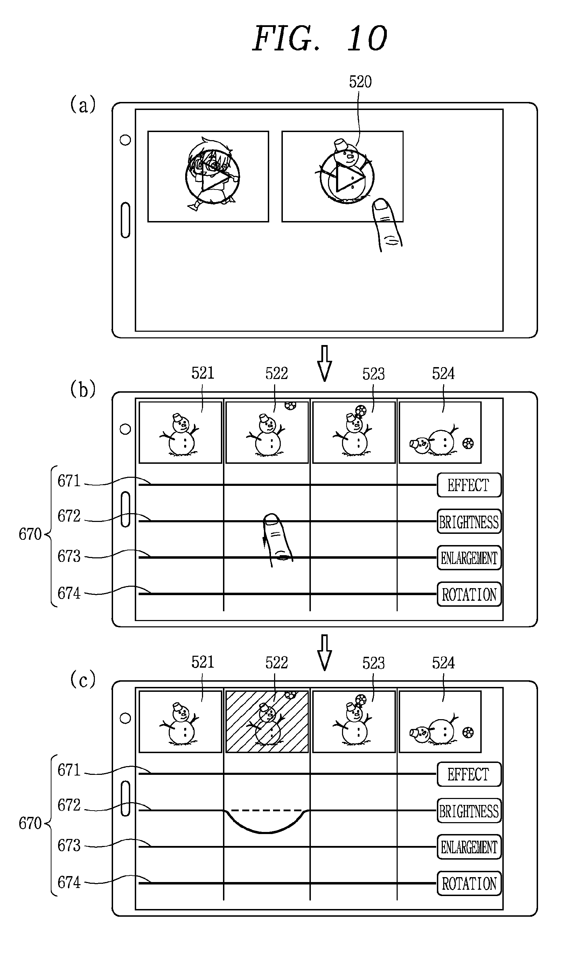

FIG. 10 is a conceptual view showing a control method for adjusting a display status of a frame of a video. The control unit 180 may control the display unit 151 to select a video file 520 and to display the selected video in addition to a plurality of frames that are divided into predetermined periods. First to fourth images 521, 522, 523, and 524 are listed in one direction.

The display unit 151 displays a seventh image 670 in addition to the first to fourth frames 521, 522, 523, and 524. The seventh control image 670 may include first to fourth control lines 671, 672, 673, and 674. However, the number of control lines is not limited thereto. Respective control lines correspond to different display statuses. Fore example, the display statuses may include an effect, a brightness, an enlargement, a rotation, and so on.

The control unit 180 may adjust a display status of one of a plurality of frames on the basis of a touch input applied to one of the plurality of control lines. The control line may be divided into regions corresponding to the plurality of frames. Thus, the control unit 180 may select one of a plurality of frames on the basis of a touch input applied to one region of the control line.

When one framed is selected to be controlled, the control unit 180 controls the display unit 151 to adjust a display status of the selected frame on the basis of the touch input applied to the control line.

For example, the control unit 180 may control the display unit 151 to adjust the brightness to make the second frame 522 darker on the basis of a continuous touch input applied to a region corresponding to the second frame 522 of the second control line 672.

Thus, a user may independently adjust display statuses of a plurality of frames included in a video file while comparing the frames with each other.

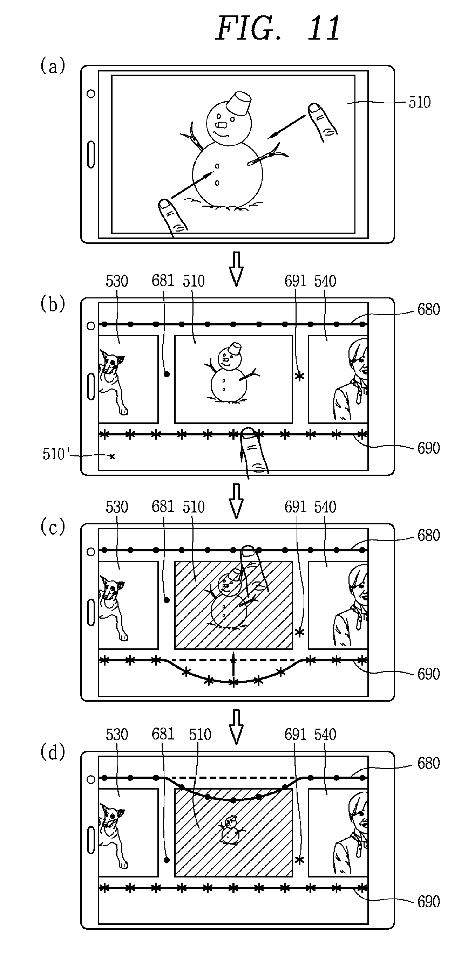

FIG. 11 is a conceptual view showing a control method for changing a display status of one frame on a screen information window where a plurality of images are displayed according to another embodiment of the present invention.

Referring to (a) and (b) of FIG. 11, when the image 510 is displayed on the entire display unit 151, the control unit 180 controls the display unit 151 to reduce and display the image 510 on the basis of a touch input applied to the display unit 151.

The display unit 151 displays the reduced image 510 at the center of the display unit 151 and displays first and second additional images 530 and 540 adjacent to the right and left of the image 510, respectively. The display unit 151 may display only a portion of the first and second additional images 530 and 540.

Eighth and ninth control images 680 and 690 are displayed in a control region 510' adjacent to the image 510 and the first and second additional images 530 and 540. In addition, the display unit 151 further displays eighth and ninth status indication point 681 and 691 corresponding to the eighth and ninth control images 680 and 690, respectively.

For example, the eighth and ninth control images 680 and 690 may be formed in a control line adjacent to the top edge and the bottom edge of the image, and the eighth and ninth status indication points 681 and 691 may be displayed adjacent to a side edge of the image 510. The eighth and ninth status indication points 681 and 691 denote degrees of display statuses that are adjusted by the eighth and ninth control images 680 and 690, respectively.

The control unit 180 selects the image displayed at the center of the display unit 151 as an image having a display status to be controlled. The control unite 180 may display the first and second additional images 530 and 540 at the center of the display unit 151 on the basis of the touch input. In this case, the first and second additional images 530 and 540 is selected.

The control unit 180 may adjust a display status of the image 510 on the basis of a touch input applied to the eighth and ninth control images 680 and 690. Thus, positions for displaying the eighth and ninth status indication points 681 and 691 are changed.

The display status of the selected image may be changed. Screen information including a plurality of images is not limited to that shown in the drawings.

That is, the user may select at least one image using a control space between images, and easily change a display status of the image by applying a continuous touch input to the control space.

Therefore, the user need not display a menu screen for changing one image and may adjust a display status of a selected image while comparing the image with other images.

According to an embodiment of the present invention, a touch sensing unit of the display unit receives a touch input applied to a control region between images while a plurality of images are displayed together. It is possible to select an image adjacent to the control region where the touch input is received and transform the selected image on the basis of a touch input scheme.

That is, it is possible to easily select one of the plurality images and to simply transform and display the selected image in a desired method without switching the screen.

In addition, a control image may be displayed between the plurality of images, thus allowing a user to easily recognize a touch region. The control image may be transformed in an elastic form according to a touch input of a user, thus providing the user with a feeling like flicking an elastic material.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal comprising:
a display unit configured to display a plurality of images together, the plurality of images being separated from one another;
a touch sensing unit configured to receive a touch input applied to a control region between the plurality of images; and
a control unit configured to select at least one of the plurality of images and control the display unit to change a display status of the selected image.

2. The mobile terminal of claim 1, wherein the display unit includes a first control image including a plurality of control lines extending in a first direction in the control region, and
wherein the control unit selects an image adjacent to one region of the plurality of control lines, the touch input being applied to the region.

3. The mobile terminal of claim 2, wherein the control unit controls the display unit to partially transform and display the control line based on a continuous touch input moved in a direction intersecting with the first direction and to restore and display the partially transformed portion when the continuous touch input is released.

4. The mobile terminal of claim 3, wherein when a continuous touch input is applied in a direction opposite to the direction intersecting with the first direction, the control unit controls the display unit to retransform and display the image.

5. The mobile terminal of claim 3, wherein the display unit displays a status indication point indicating a degree of control of a predetermined display status of the image, and
wherein when the display status is changed, the control unit changes a display position of the status indication point according to the display status based on a touch input applied to the first control image.

6. The mobile terminal of claim of one of any claims 2 to 5, wherein the control unit controls the display unit to transform the image based on a continuous touch input that is first applied to one region of the first control image and then released from another region, and
wherein the control unit transforms the image based on a distance moved from the region to which the touch input is first applied.

7. The mobile terminal of claim of one of any claims 2 to 6, wherein the control unit controls the display unit to display a second control image having a form of a scroll bar extending in the first direction.

8. The mobile terminal of claim 2,
Wherein the control unit controls the display unit to display a second control image having a form of a scroll bar extending in the first direction, and
wherein the control unit changes a first display status of the image based on a touch input applied to the second control image, and
wherein the display unit displays the second control image used to receive a touch input to change a second display status different from the first display status of the image.

9. The mobile terminal of claim 8, wherein the first and second control images includes a plurality of control lines extending in directions intersecting with one another, and
wherein the display unit displays the plurality of control lines of the first control image and the second control image in forms different from each other.

10. The mobile terminal of claim of one of any claims 2 to 9, wherein the control unit selects at least one image displayed between two parallel control lines based on touch inputs applied to the two control lines, and
wherein the control unit controls the display unit to transform and display the selected at least one image based on continuous touch inputs applied to the two control lines.

11. The mobile terminal of claim 10, wherein the control unit controls the display unit to change a display direction of the image based on continuous touch inputs applied in directions opposite to each other along the two control lines.

12. The mobile terminal of claim 10, wherein the control unit controls the display unit to limit display of the selected image based on touch inputs applied in a direction approaching each other and intersecting with an extending direction of the two control lines.

13. The mobile terminal of claim 2, wherein the control unit selects a plurality of images adjacent to a control line based on a touch input applied along the control line, and
wherein the control unit controls the display unit to transform and display the plurality of images together based on a touch input applied to one control line adjacent to at least one of the plurality of images.

14. The mobile terminal of claim 1, wherein the plurality of images correspond to a plurality of frames constituting a video, and
wherein the display unit displays a plurality of extending control lines for receiving touch inputs to control different display statuses.

15. A method of controlling a mobile terminal, the method comprising:
displaying a plurality of images on a display unit, the plurality of images being separated from one another;
receiving a touch input applied to a control space between the plurality of images; and
changing a display status of an image selected based on the touch input.
